# EUROPEAN PATENT SPECIFICATION

(11) **EP 2 753 991 B1**
(45) Date of publication and mention of the grant of the patent: **17.08.2016**
(21) Application number: 11757181.0
(22) Date of filing: 10.09.2011
(51) Int. Cl.: G05B 17/02

(54) **ARRANGEMENT AND METHOD FOR SYSTEM IDENTIFICATION OF AN INDUSTRIAL PLANT OR PROCESS**
ANORDNUNG UND VERFAHREN ZUR SYSTEMIDENTIFIZIERUNG EINER INDUSTRIELLEN ANLAGE ODER EINES INDUSTRIELLEN PROZESSES
AGENCEMENT ET PROCÉDÉ D'IDENTIFICATION DE SYSTÈME D'UN ÉTABLISSEMENT OU PROCESSUS INDUSTRIEL

(43) Date of publication of application: 16.07.2014
(73) Proprietor: ABB Schweiz AG, 5400 Baden (CH)
(72) Inventor: MEADE VARGAS, Patrick Alexander, 69469 Weinheim (DE)
(74) Representative: Kock, Ina
(86) International application number: PCT/EP2011/004560
(87) International publication number: WO 2013/034171

(56) References cited:
- WO-A2-03/038686
- US-A1- 2005 251 373
- US-A1- 2008 177 513

## Description

The invention relates to an arrangement and a method for determining a linear parametric dynamic system model of the open-loop dynamic behaviour of an industrial plant or an industrial process, the arrangement comprising a data reading unit to read in measured input data and measured output data of the industrial plant or the industrial process, a simulator unit to simulate a dynamic behaviour of the system model as a response to the measured input data, thereby generating simulated output data, a comparator unit to compare the measured output data to the simulated output data in order to determine a quality of the system model, an estimator unit to determine a model order of the system model as well as corresponding system model parameters by minimizing a difference between the measured output data and the simulated output data using a method of least squares until the quality of the system model is determined to be sufficiently high a parameter interface to provide the model order and the system model parameters to a control design unit.

In other words, the arrangement and method relate to the field of system identification, where system identification is an essential and critical part of control system engineering. The area of control system engineering plays a role in different industry sectors, such as process industry like pharmaceutical and chemical industry, or manufacturing industry or mineral and oil and gas industry. The term control system engineering is used for all kinds of activities which are related to the designing, verification and validation, implementation and testing of a control system for a technical system used in these industry sectors, where the technical system may be a part or the whole of an industrial plant or an industrial process. The control system comprises at least one industrial control device, at least one sensor and at least one actuator, where the control device receives measurements taken by the at least one sensor from the technical system and determines based on these measurements and, if applicable, based on further information suitable actions of the at least one actuator to regulate the behaviour of the industrial plant or the industrial process.

In order to be able to design a control system which is optimally suited to the dynamic behaviour of the industrial plant or process, a mathematical model of the un-controlled and therefore open-loop dynamic behaviour of the industrial plant or process needs to be determined first, where the determination of the mathematical model is called system identification. The present invention relates to the field of identification of linear parametric dynamic system models, thereby being distinguished from the identification of non-parametric models, nonlinear models or static models. Linear parametric dynamic system models are commonly defined in the time domain by so called state space models and in the frequency domain by so called transfer functions.

The process of identification involves the estimation of the parameters of the state space model or transfer function, respectively, which in case of a transfer function are the gain and one or more time constants. System identification is normally carried out with the support of computer devices and can be entirely automated, which increases the efficiency and cost effectiveness of the overall control system engineering, especially when applied in a large scale.

In US 2008/0177513 A1, a method and a system are described for creating a model which models the behaviour in a process plant. The model uses M process variable data sets, where M is an integer, to determine statistical data that may be used to scale process variable data sets. The M process variable data sets are scaled and then utilized to calculate intermediate model terms. Each additional process variable data set is then scaled using the statistical data and afterwards utilized to update the intermediate model terms. When an adequate number of process variable data sets have been processed, the model may be calculated using the intermediate model terms.

From US 2005/0251373 A1, a method is known to automatically generate a posynomial performance parameter model of a linear or non-linear system. The performance data can be obtained by simulation, measurement or observation. The model is generated by fitting a signomial model to the numerical performance data followed by an automatic recasting into a posynomial model. The signomial model can be an n^{th} order polynomial.

An example of a known computer tool for designing and optimizing control systems for the process industries is ABB's Loop Optimizer Suite, as described in the corresponding Product Guide No. 3BSE 016 144R201. The Loop Optimizer Suite contains a so called Plant Loop Identification module to identify open or closed loop dynamics of an industrial plant or an industrial process directly from raw data, applying a least square method. The identified description of the system model then forms the input to the so called Controller Design module of the Loop Optimizer Suite, which automates the design of both feedback and feedforward controllers.

The inventor has realized that it is not uncommon with known system identification tools that the description of the identified system model, in particular the parameters of the system model, are given in a format which may be inappropriate for the subsequent control design. This is in particular the case when the parameters are of considerably differing order of magnitude, which may result in computational problems during the automatic designing of controllers. In other words, when the model parameters are out of proportions and/or close to zero, the controller design algorithms may experience problems to converge properly or to deliver controller parameters which are of a suitable format for later computation themselves. This problem is especially immanent in the case of industrial plants or processes with a higher order open-loop behaviour and long dead times, where the resulting system model possesses a higher number of parameters which leads to a higher degree of freedom, i.e. to having more than one way in which the system dynamics can be correctly described. This is the case, for example, with most main control loops in a power plant.

Apart from the above named disadvantage of unsuitable parameter formats, the inventor has further realized that in case of a higher order industrial plant or process, the identification algorithm or algorithms take longer to converge and to find the appropriate characteristics of the system. The main reason for this is that they have to evaluate more parameters, hence need to perform more iterations. This becomes critical as the number of control loops to be optimized increases. In case of a power plant which usually has hundreds of control loops, a longer computation time for the identification of the open-loop behaviour of each part of the plant belonging to one of the control loops becomes a considerable factor in effort and costs.

One solution to overcome these problems is to adjusting the parameters of the identified system model by hand. However, this is an iterative and sometimes long process.

Accordingly, it is an object of the invention to suggest an arrangement and method for system identification of an industrial plant or process as described in the introduction, with which the above named problems can be overcome.

This object is achieved by an arrangement and a method according to the independent claims.

According to the invention, the estimator unit of the arrangement for determining a linear parametric dynamic system model of the open-loop behaviour of an industrial plant or an industrial process is arranged to at first determine intermediate parameters uniquely describing the open-loop dynamic behaviour of the industrial plant or process, where the number of the intermediate parameters is predetermined and is defined to be not larger than the number of system model parameters, and to afterwards calculate the system model parameters from the intermediate parameters using a predetermined unique allocation between the intermediate parameters and the system model parameters. The term "unique" in connection with the intermediate description of the open-loop dynamic behaviour means that the intermediate description is chosen such that only and exclusively one solution, or in other words one set of intermediate parameters, exists for each industrial plant or process.

Similarly, the method according to the invention comprises the following two main steps: at first, to determine intermediate parameters uniquely describing the open-loop dynamic behaviour of the industrial plant or process, where the number of the intermediate parameters is predetermined and is defined to be not larger than the number of system model parameters, and afterwards, to calculate the system model parameters from the intermediate parameters using a predetermined unique allocation between the intermediate parameters and the system model parameters

The main two elements of the present invention are the reduction of the number of parameters to be determined by the estimator unit by introducing a unique intermediate description of the open-loop dynamic behaviour of the industrial plant or process via intermediate parameters, and the definition of a unique allocation between the intermediate parameters and the parameters of the system model, where the number of intermediate parameters is not larger than the number of system model parameters. The first of these two elements leads to a simplification of the identification process itself, i.e. of the minimizing of the difference between the measured output data and the simulated output data using a method of least squares. This is due to the fact that in most cases fewer parameters need to be determined. Thereby, the degree of freedom and the number of possible solutions of the minimizing algorithm is reduced, which results in a reduction of the amount of iterations required to find a solution and thereby in a reduction of computation time. The second of the two elements, the unique allocation between the smaller number of identified intermediate parameters and the higher number of system model parameters, ensures that the number of possible solutions for the identification problem is continued to be kept low. In addition, it provides the opportunity to bring the system model parameters into a format which is suitable for a subsequent control design, i.e. the parameters can be shaped in a desired way.

As a result, the system identification and control design, and accordingly the commissioning, of a large amount of control loops, as for example for power plants, becomes less time consuming. Further, the control performance and the plant or process stability are improved thanks to a higher accuracy of the identified system model parameters and of the resulting controller parameters. Even further, since the adjusting of parameters by hand is avoided, the commissioning of complex control loops in the field can now be performed by less experienced and non-specialized field engineers compared to highly specialized control engineers, so that the commissioning effort is reduced.

In an embodiment of the invention, the unique allocation is chosen so that for each set of intermediate parameters the allocated system model parameters are of approximately the same order of magnitude. As a result, computational problems during a subsequent control and controller design are avoided and the probability for the generation of symmetrical controller parameters which are suitable for later computation in an industrial control device is increased.

In a further embodiment, the intermediate parameters are a gain, a dead time constant and a balancing time constant describing the step response of the industrial plant or the industrial process and the unique allocation is chosen so that each system model parameter varies with varying ratio of the dead time constant over the balancing time constant only. Accordingly, the intermediate description of the open-loop dynamic behaviour is represented by only three parameters: gain, dead time constant and balancing time constant; and it is suitable to approximate the dynamic behaviour of higher-order dynamic systems, in particular higher-order systems with a sufficiently high damping factor, i.e. systems with only little or no oscillation in their open-loop step response.

Choosing the unique allocation in such a way that the system model parameters are determined solely based on the ratio of the dead time constant over the balancing time constant limits the number of possible solutions for each set of intermediate parameters to exactly one.

In a development of the further embodiment, the number of system model parameters and thereby the model order of the system model increases with increasing ratio of the dead time constant over the balancing time constant. In that way, it is ensured that system models of varying order and thereby complexity can be identified based on the same approach with the step response.

In a further development of this embodiment, the measured input and output data represent a step response of the plant or process and the estimator unit is arranged to determine the gain, the dead time constant and the balancing time constant using the inflectional tangent method. The inflectional tangent method will be described with respect to the figures below.

In a specific embodiment of the invention, the system model is assumed to be a series of at least two first-order lag elements with the system model parameters being a gain and at least two lag time constants, each of the lag time constants corresponding to one of the first-order lag elements. This is the type of higher-order system models which is particularly suitable to be approximated by determining the dead time and balancing time constants of a corresponding step response, and it is commonly used to describe the dynamic behaviour of plants or processes including heating or cooling elements, such as power plants containing a steam turbine cycle.

It is particularly advantageous to combine the arrangement according to the invention with a control design unit in order to directly make use of the optimally shaped system model parameters during a subsequent controller design. Accordingly, it is one aspect of the invention to have a control design system which comprises an arrangement as described above as well as a control design unit, where the control design unit determines parameters of a closed-loop controller based on the model order and the system model parameters and where the parameters of the closed-loop controller are transmitted to an industrial control device arranged for controlling the industrial plant or the industrial process.

The invention and its embodiments will become apparent from the example and its embodiments described below in connection with the appended drawings which show:
- Fig. 1: a block diagram of a known system identification arrangement and method,
- Fig. 2: a block diagram of an embodiment of the system identification arrangement and method according to the invention,
- Fig. 3: a diagram of the time dependent behaviour of measured input and output data of a power plant,
- Fig. 4: a diagram of a unique allocation between intermediate parameters and system model parameters,
- Fig. 5: two diagrams explaining the inflectional tangent method,
- Fig. 6: a block diagram of a control design system in interconnection with a control device and a plant or process to be controlled.

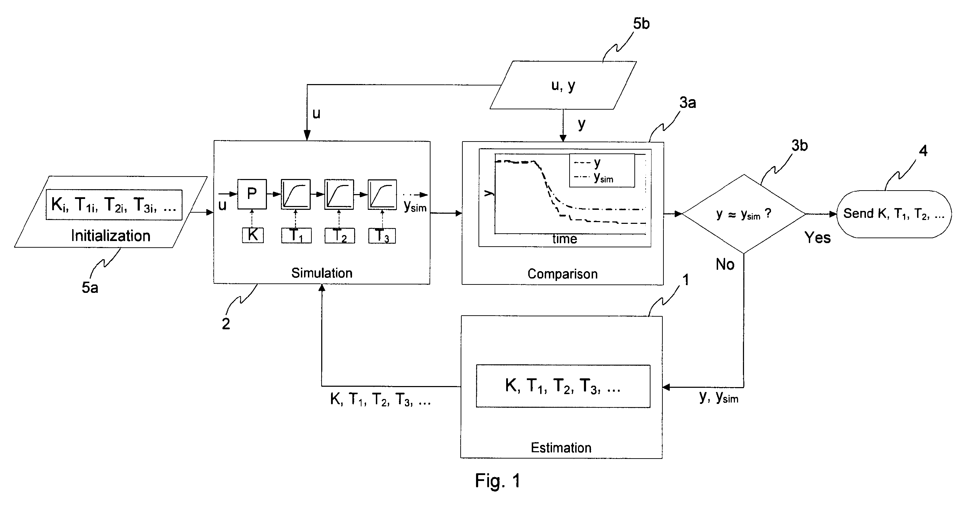

Fig. 1 shows a block diagram of a known system identification arrangement and method. In fact, the diagram of Fig. 1 is a combination of a block diagram and a flow chart, so that both the main elements of the arrangement as well as the steps of the method are illustrated. The main elements of the system identification arrangement are an estimator unit 1, an evaluator unit comprising a simulator unit 2, a comparator unit 3a and a decision unit 3b, a parameter interface 4 and a data reading unit comprising an initialization unit 5a and a signal reading unit 5b. The known method for system identification illustrated in Fig. 1 starts with the initialization of an initial system model by reading in initial parameters for gain K_{¡} and a certain number of time constants T₁ᵢ, T₂ᵢ to Tₙᵢ, with nᵢ being an assumed initial model order of the system model. Further, signals are read in for measured input data u and measured output data y of the industrial plant or process to be identified. The measured input data u and the initial system model parameters are input to the simulator unit 2, where a simulation of the dynamic response of the initial system model to the measured input data u is performed and simulated output data yₛᵢₘ are generated. The measured output data y and the simulated output data yₛᵢₘ are provided to the comparator unit 3a where it is determined how closely the measured output data y and the simulated output data yₛᵢₘ match, i.e. a measure for the quality of the system model is derived. Such a measure can for example be a statistical value representing the difference between the measured output data y and the simulated output data yₛᵢₘ. In the decision unit 3b it is afterwards decided, whether the measure for the quality of the system model is sufficiently high or low, i.e. whether the system model approximates the dynamic behaviour of the industrial plant or process to a satisfying degree. If not, the measured output data y and the simulated output data yₛᵢₘ are taken by the estimator unit 1 to determine a new model order n of the system model, which may differ from the initial model order nᵢ or may be equal to it, as well as corresponding system model parameters K and T₁ to Tₙ. This is done by minimizing a difference between the measured output data y and the simulated output data yₛᵢₘ using a method of least squares. The newly determined system model parameters are input to the simulator unit 2, where the method continues as described above. If it is decided in the decision unit 3b, that the difference between the measured output data y and the simulated output data yₛᵢₘ is sufficiently small, the system model parameters K and T₁ to Tₙ which were last generated are provided by the parameter interface 4 to a control design unit.

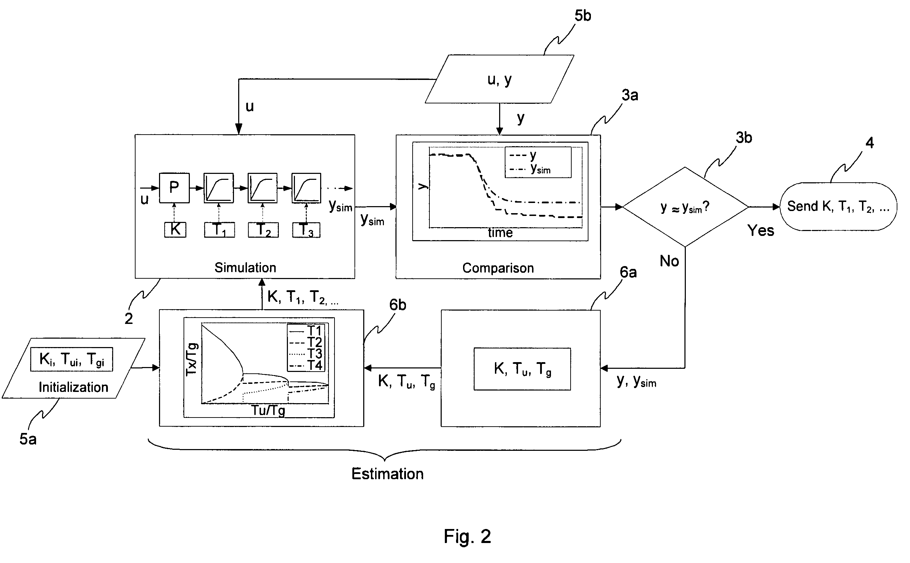

The above described known system identification arrangement and method are improved by the present invention, as will now be further explained with respect to Fig. 2. In Fig. 2, the following elements correspond to the elements of Fig. 1 and are therefore marked with the same reference signs: the evaluator unit comprising the simulator unit 2, the comparator unit 3a and the decision unit 3b, the parameter interface 4 and the signal reading unit 5b of the data reading unit. In contrast to Fig. 1, the initialization unit 5c of the data reading unit now has a slightly different function and the estimator unit consists now of two parts, a restrained estimator unit 6a and a parameter conversion unit 6b.

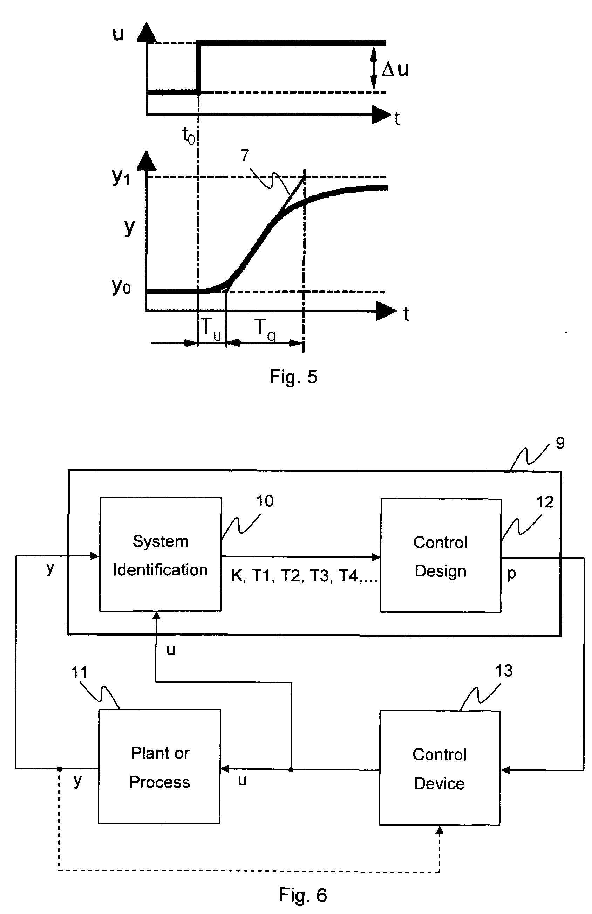

The method carried out by the arrangement of Fig. 2 will now be explained for a specific embodiment of the invention. The method starts again with the initialization. According to the invention, the parameters determined by the restrained estimator unit 6a are intermediate parameters of a preferably reduced number m, compared to the number s of the system model parameters. In this special embodiment, an intermediate description of the open-loop dynamic behaviour of the industrial plant or process is based on a step response of the plant or process, where three intermediate parameters determine the time dependent behaviour of the step response, the intermediate parameters being a gain K, a dead time constant Tᵤ and a balancing time constant T_{g}. An example for the output signal y for a step response of an industrial plant or process is shown in the lower part of Fig. 5, where the upper part shows the corresponding step-wise input signal u to the plant or process. From the step response of Fig. 5, the intermediate parameters can be determined in the following way, by using the inflectional tangent method. The gain K is determined as the ratio of the difference between the final output value y₁ and the initial output value y₀ over the height of the input step Δu, i.e. K = (y₁-y₀) / Δu. In order to determine the two time constants, the inflectional tangent 7 is to be inserted into the diagram. The time difference between the start time t₀ of the input step (see upper part of Fig. 5) and the intersection point of the inflectional tangent 7 with the initial output value y₀ defines the dead time constant Tᵤ. The time difference between the intersection point of the inflectional tangent 7 with the initial output value y₀ and the intersection point of the inflectional tangent 7 with the final output value y₁ defines the balancing time constant T_{g}.

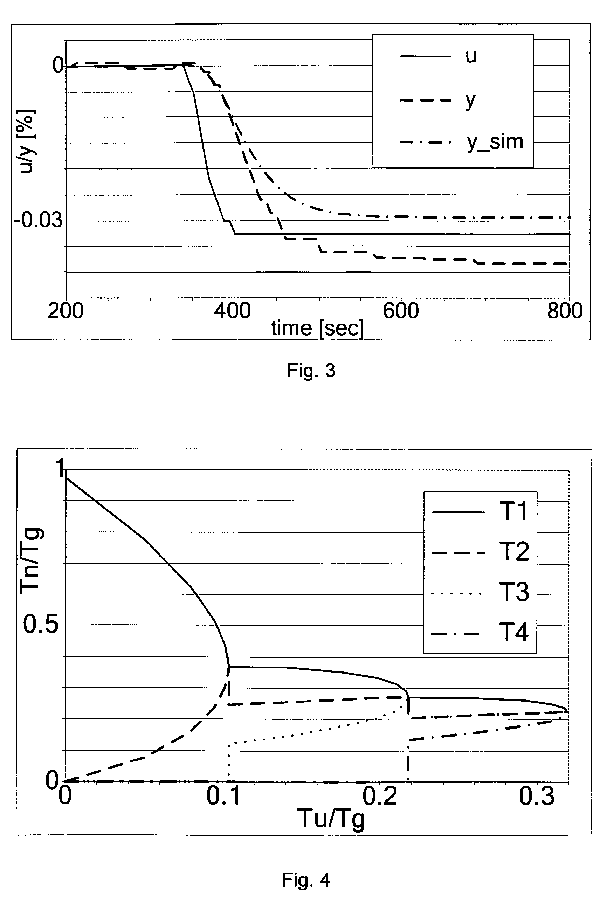

The three initial intermediate parameters K_{¡}, Tᵤᵢ and T_{gi}, are input to the parameter conversion unit 6b, where they are converted into corresponding initial system model parameters, with the gain being the same for both model types. The conversion is now explained with respect to Fig. 4, which shows a diagram of a unique allocation between the intermediate parameters describing a step response of the plant or process to be identified and the system model parameters, more specifically between the time constants of the intermediate parameters and the system model parameters. In this particular embodiment, the unique allocation is chosen so that each system model time constant T₁ to Tₙ varies with varying ratio of the dead time constant Tᵤ over the balancing time constant T_{g}. In addition, the number of system model time constants T₁ to Tₙ and thereby the model order of the system model increases with increasing ratio Tᵤ/T_{g}. The system model is assumed to be a series of at least two first-order lag elements, where each lag element is solely defined by its corresponding lag time constant T₁ to Tₙ. The number of first-order lag elements corresponds directly to the order of the system model.

From left to right in Fig. 4, it can be seen that for a ratio T_{u/}T_{g} between 0 and 0.1, only the first two time constants T₁ and T₂ are defined, while the further time constants T₃ and T₄ are set to zero. In this area, the intermediate parameters are allocated to a second-order system model. Between a ratio Tᵤ/T_{g} of 0.1 and 0.22, three time constants T₁, T₂ and T₃ receive a value different from zero, i.e. the system model is of third order, and over a ratio Tᵤ/T_{g} of 0.22, all four time constants T₁, T₂, T₃ and T₄ are defined for a system model of fourth order, with the first two time constants T₁ and T₂ having the same values. What becomes apparent from Fig. 4 is that the unique allocation is chosen so that for each set of intermediate time constants the allocated system model time constants are of approximately the same order of magnitude between 0 and 1. The unique allocation shown in Fig. 4 is implemented in the parameter conversion unit 6b in form of a look-up table plus some computer functions to handle the transition areas between the different model orders of the system model, i.e. the areas where the ratio Tᵤ/T_{g} crosses the values 0.1 and 0.22, respectively. Instead of a look-up table, it is also possible to implement a unique allocation in the form of equations.

Returning to Fig. 2, the initial dead time and balancing time constants are converted by the parameter conversion unit 6b into uniquely allocated initial system model time constants T₁ᵢ to Tₙᵢ, with the initial order nᵢ. Further, the signals for measured input data u and measured output data y of the industrial plant or process to be identified are read in by the signal reading unit 5b. The measured input data u and measured output data y are taken from the industrial plant or process in open-loop mode, i.e. without a controller regulating the behaviour of the plant or process, and the data may be directly transmitted by the signal reading unit 5b to other units of the arrangement of Fig. 2, or they may be processed first by the signal reading unit 5b in order to be filtered and/or scaled. The measured input data u and the initial system model parameters Kᵢ and T₁ᵢ to Tₙᵢ are input to the simulator unit 2, where a simulation of the dynamic response of the initial system model to the measured input data u is performed and simulated output data yₛᵢₘ are generated. The measured output data y and the simulated output data yₛᵢₘ are provided to the comparator unit 3a where the measure for the quality of the system model is derived.

In the decision unit 3b, it is then decided, whether the measure for the quality of the system model is sufficiently high or low, i.e. whether the system model approximates the dynamic behaviour of the industrial plant or process to a satisfying degree. An example for the possible time dependent shape of measured input signal u, measured output signal y and simulated output signal yₛᵢₘ is shown in Fig. 3. There, it can be seen that both the timely behaviour of the measured output signal y and the simulated output signal yₛᵢₘ as well as the respective gains differ, so that decision unit 3b very likely decides that the quality of the system model does not suffice, yet.

If such a case, the measured output data y and the simulated output data yₛᵢₘ are taken by the restrained estimator unit 6a to determine new intermediate parameters K, Tᵤ and T_{g} by minimizing the difference between the measured output data y and the simulated output data yₛᵢₘ using a method of least squares. The restrained estimator unit 6a is hereby forced to take into account certain predetermined restraints, which in the case of this special embodiment are the requirements that the intermediate parameters determine the time-dependent behaviour of a step response and that the inflectional tangent method is to be applied. The newly determined intermediate parameters are input to the parameter conversion unit 6b, where the corresponding set of system model parameters is determined, i.e. K is kept the same and the time constants Tᵤ and T_{g} are converted into the time constants T₁ to Tₙ, where the order n of the system model is solely determined by the ratio Tᵤ/T_{g}. Afterwards, simulator unit 2 continues with the method as described above.
If it is decided in the decision unit 3b, that the quality of the system model is sufficiently high, the system model parameters K and T₁ to Tₙ which were last generated are provided by the parameter interface 4 to a control design unit.

For the example of Fig. 2, the number of system model parameters s is equal to (n+1), i.e. equal to the order n of the system model and thereby to the number of system model time constants T₁ to Tₙ plus one, due to the gain K. The number m of the intermediate parameters is three, and the expected number s of system model parameters is at least three, since the minimum number of system model time constants is two, as can be seen from the allocation of Fig. 4.

This is shown in Fig. 6, which depicts a control design system 9 comprising the arrangement 10 for determining the linear parametric dynamic system model of the open-loop behaviour of an industrial plant process 11, according to Fig. 2, as well as a control design unit 12. The control design system 9 maybe be arranged either as a single computational device or as a group of computational devices communicating with each other via wire-bound or wireless data communication links, i.e. the transmission of the system model parameters K and Tᵢ to Tₙ between the arrangement 10 and the control design unit 12 may take place inside one and the same computational device or via a data communication link. The control design unit 12 determines a feedback and/or feedforward controller for controlling the dynamic behaviour of the industrial plant or process 11 and provides the controller structure and parameters p to an industrial control device 13. The industrial control device 13 is then able to regulate the dynamic behaviour of the industrial plant or process 11. The dotted feedback line from the output of the industrial plant or process 11 to the industrial control device 13 indicates that measured output signals y are only fed back when the industrial control device 13 is active, i.e. during closed loop operation of the industrial plant or process 11. During time periods when measured input data u and measured output data y are taken for system identification purposes, the industrial plant or process 11 is operated in open-loop mode. The switching between open-loop and closed-loop mode can either be done manually, i.e. the identification is initiated by an operator, or it can be done automatically, resulting in an online identification which is for example performed periodically or after the occurrence of certain events indicating a change in the dynamic behaviour of the industrial plant or process 11. The arrangement 10 may in addition be used to identify the dynamic behaviour of the industrial plant or process 11 at different load settings, such as full load, half load and minimum load, i.e. the linear parametric dynamic system model is determined for each of the load settings separately. Accordingly, separate controllers are designed by the control design unit 12 for each of the load settings as well. During closed-loop operation, the industrial control device 13 interpolates between the different controllers depending on the current load setting. If in this case the restrained estimator unit 6a is further restrained by predetermining a specific range of the ratio of the dead time constant Tᵤ over the balancing time constant T_{g}, the order n of the resulting system model can be fixed to a desired number. In the example of Fig. 4, the order can be fixed to n=3, if the ratio Tᵤ/T_{g} is predetermined to be not less than 0.1 and not greater than 0.22. With system models of fixed order for different load settings, it can be ensured that the order of the corresponding controllers is fixed as well. In other words, the number of parameters stays the same for all system models and corresponding controllers, irrespective of the current load setting. As a result, the interpolation between the different controllers is simplified.

## Claims

1. Arrangement (10) adapted to determine a linear parametric dynamic system model of the open-loop dynamic behaviour of an industrial plant or an industrial process (11), comprising
• a data reading unit (5a, 5b) to read in measured input data (u) and measured output data (y) of the industrial plant or the industrial process (11),
• an evaluator unit (2, 3a, 3b) to simulate a dynamic behaviour of the system model as a response to the measured input data (u), thereby generating simulated output data (yₛᵢₘ), and to compare the measured output data (y) to the simulated output data (yₛᵢₘ) in order to determine a quality of the system model,
• an estimator unit (6a, 6b) to determine a model order (n) of the system model in the form of the number of system model parameters, as well as to determine corresponding system model parameters (K, T₁ to Tₙ) by minimizing a difference between the measured output data (y) and the simulated output data (yₛᵢₘ) using a method of least squares until the quality of the system model is determined to be sufficiently high,
• a parameter interface (4) to provide the model order (n) and the system model parameters (K, T₁ to Tₙ) to a control design unit (12),
**characterized in that**
• the estimator unit (6a, 6b) is arranged to at first determine intermediate parameters (K, Tᵤ, T_{g}) uniquely describing the open-loop dynamic behaviour, where the number (m) of the intermediate parameters is predetermined and is defined to be not larger than the number of system model parameters (s), and to afterwards calculate the system model parameters (K, T₁ to Tₙ) from the intermediate parameters (K, Tᵤ, T_{g}) using a predetermined unique allocation between the intermediate parameters and the system model parameters,
• wherein the unique allocation is chosen so that for each set of intermediate parameters (K, Tᵤ, T_{g}) the allocated system model parameters (K, T₁ to Tₙ) are of the same order of magnitude.

2. Arrangement according to claim 1, where the intermediate parameters are a gain (K), a dead time constant (Tᵤ) and a balancing time constant (T_{g}) describing the step response of the industrial plant or the industrial process and where the unique allocation is chosen so that each system model parameter varies with varying ratio of the dead time constant (Tᵤ) over the balancing time constant (T_{g}) only.

3. Arrangement according to claim 2, where the number of system model parameters and thereby the model order (n) of the system model increases with increasing ratio of the dead time constant (Tᵤ) over the balancing time constant (T_{g}).

4. Arrangement according to any of claims 2 or 3, where the measured input (u) and output (y) data represent a step response of the plant or process and where the estimator unit (6a, 6b) is arranged to determine the gain (K), the dead time constant (Tᵤ) and the balancing time constant (T_{g}) based on the inflectional tangent method.

5. Arrangement according to any of the previous claims, where the system model is assumed to be a series of at least two first-order lag elements with the system model parameters being a gain (K) and at least two lag time constants (T₁, T₂), each of the lag time constants corresponding to one of the first-order lag elements.

6. Control design system comprising an arrangement (10) according to any of the previous claims as well as a control design unit (12), where the control design unit (12) determines parameters (p) of a closed-loop controller based on the model order (n) and the system model parameters (K, T₁ to Tₙ) and where the parameters of the closed-loop controller (p) are transmitted to an industrial control device (13) arranged for controlling the industrial plant or the industrial process (11).

7. Method to determining a linear parametric dynamic system model of the open-loop dynamic behaviour of an industrial plant or an industrial process (11), comprising the steps of
• reading in measured input data (u) and measured output data (y) of the industrial plant or the industrial process (11),
• simulating a dynamic behaviour of the system model as a response to the measured input data (u), thereby generating simulated output data (yₛᵢₘ),
• comparing the measured output data (y) to the simulated output data (yₛᵢₘ) in order to determine a quality of the system model,
• determining a model order (n) of the system model as well as corresponding system model parameters (K, T₁ to Tₙ) by minimizing a difference between the measured output data (y) and the simulated output data (yₛᵢₘ) using a method of least squares until the quality of the system model is determined to be sufficiently high,
• providing the model order (n) and the system model parameters (K, T₁ to Tₙ) to a control design unit,
**characterized in that**
• at first, intermediate parameters (K, Tᵤ, T_{g}) uniquely describing the open-loop dynamic behaviour are determined, where the number (m) of the intermediate parameters is predetermined and is defined to be not larger than the number of system model parameters (s), and
• afterwards, the system model parameters (K, T₁ to Tₙ) are calculated from the intermediate parameters (K, Tᵤ, T_{g}) using a predetermined unique allocation between the intermediate parameters and the system model parameters,
• wherein the unique allocation is chosen so that for each set of intermediate parameters (K, Tᵤ, T_{g}) the allocated system model parameters (K, T₁ to Tₙ) are of the same order of magnitude.

8. Method according to claim 7, where the intermediate parameters are a gain (K), a dead time constant (Tᵤ) and a balancing time constant (T_{g}) describing the step response of the industrial plant or the industrial process and where the unique allocation is chosen so that each system model parameter varies with varying ratio of the dead time constant (Tᵤ) over the balancing time constant (T_{g}) only.

9. Method according to claim 8, where the number of system model parameters and thereby the model order (n) of the system model increases with increasing ratio of the dead time constant (Tᵤ) over the balancing time constant (T_{g}).

10. Method according to any of claims 8 or 9, where the measured input (u) and output (y) data represent a step response of the plant or process and where the gain (K), the dead time constant (Tᵤ) and the balancing time constant (T_{g}) are determined based on the inflectional tangent method.

11. Method according to any of claims 7 to 10, where the system model is assumed to be a series of at least two first-order lag elements with the system model parameters being a gain (K) and at least two lag time constants (T₁, T₂), each of the lag time constants corresponding to one of the first-order lag elements.

## Patentansprüche

1. Anordnung (10), die zur Bestimmung eines linearen parametrischen dynamischen Systemmodells des dynamischen Verhaltens mit offenem Regelkreis von einer industriellen Anlage oder einem industriellen Prozess (11) adaptiert ist, umfassend
• eine Datenleseeinheit (5a, 5b) zum Lesen in gemessenen Eingabedaten (u) und gemessenen Ausgabedaten (y) der industriellen Anlage oder des industriellen Prozesses (11),
• eine Auswertungseinheit (2, 3a, 3b) zum Simulieren eines dynamischen Verhaltens des Systemmodells als Antwort auf die gemessenen Eingabedaten (u), wodurch simulierte Ausgabedaten (y_{Sim}) generiert werden, und zum Vergleichen der gemessenen Ausgabedaten (y) mit den simulierten Ausgabedaten (y_{Sim}), um eine Qualität des Systemmodells zu bestimmen,
• eine Abschätzeinheit (6a, 6b) zum Bestimmen einer Modellordnung (n) des Systemmodells in Form der Anzahl der Parameter des Systemmodells sowie zum Bestimmen entsprechender Parameter des Systemmodells (K, T₁ bis Tₙ) durch Minimieren einer Differenz zwischen den gemessenen Ausgabedaten (y) und den simulierten Ausgabedaten (yₛᵢₘ) unter Verwendung einer Methode der kleinsten Quadrate, bis die Qualität des Systemmodells als ausreichend hoch bestimmt wird,
• eine Parameterschnittstelle (4) zum Bereitstellen der Modellordnung (n) und der Parameter des Systemmodells (K, T₁ bis Tₙ) an eine Steuerungsdesigneinheit (12),
**dadurch gekennzeichnet, dass**
• die Abschätzeinheit (6a, 6b) angeordnet ist, um zuerst Intermediärparameter (K, Tᵤ, T_{g}) zu bestimmen, die das dynamische Verhalten mit offenem Regelkreis eindeutig beschreiben, wobei die Anzahl (m) der Intermediärparameter vorab festgelegt wird und als nicht größer als die Anzahl der Parameter des Systemmodells (s) definiert ist, und wobei nachfolgend die Parameter des Systemmodells (K, T₁ bis Tₙ) aus den Intermediärparametern (K, Tᵤ, T_{g}) unter Verwendung einer vorab festgelegten eindeutigen Zuordnung zwischen den Intermediärparametern und den Parametern des Systemmodells berechnet werden,
• wobei die eindeutige Zuordnung so gewählt wird, dass für jeden Satz von Intermediärparametern (K, Tᵤ, T_{g}) die zugeordneten Parameter des Systemmodells (K, T₁ bis Tₙ) in derselben Größenordnung liegen.

2. Anordnung nach Anspruch 1, wobei die Intermediärparameter eine Verstärkung (K), eine Totzeitkonstante (Tᵤ) und eine Ausgleichszeitkonstante (T_{g}) sind, die die Sprungantwort der industriellen Anlage oder des industriellen Prozesses beschreiben, und wobei die eindeutige Zuordnung so gewählt wird, dass jeder Parameter des Systemmodells nur mit variierendem Verhältnis der Totzeitkonstante (Tᵤ) zu der Ausgleichszeitkonstante (T_{g}) variiert.

3. Anordnung nach Anspruch 2, wobei die Anzahl der Parameter des Systemmodells und dadurch die Modellordnung (n) des Systemmodells mit zunehmendem Verhältnis der Totzeitkonstante (Tᵤ) zu der Ausgleichszeitkonstante (T_{g}) zunimmt.

4. Anordnung nach einem der Ansprüche 2 oder 3, wobei die gemessenen Eingabedaten (u) und Ausgabedaten (y) eine Sprungantwort in der Anlage oder dem Prozess repräsentieren, und wobei die Abschätzeinheit (6a, 6b) so angeordnet ist, dass die Verstärkung (K), die Totzeitkonstante (Tᵤ) und die Ausgleichskonstante (T_{g}) basierend auf der Wendetangentenmethode bestimmt werden.

5. Anordnung nach einem der vorhergehenden Ansprüche, wobei das Systemmodell als eine Reihe von mindestens zwei Verzögerungselementen erster Ordnung angenommen wird, wobei die Parameter des Systemmodells eine Verstärkung (K) und mindestens zwei Verzögerungszeitkonstanten (T₁, T₂) sind, wobei jede der Verzögerungszeitkonstanten einem der Verzögerungselemente erster Ordnung entspricht.

6. Steuerungsdesignsystem, umfassend eine Anordnung (10) nach einem der vorhergehenden Ansprüche sowie eine Steuerungsdesigneinheit (12), wobei die Steuerungsdesigneinheit (12) Parameter (p) einer Steuerung mit geschlossenem Regelkreis basierend auf der Modellordnung (n) und den Parametern des Systemmodells (K, T₁ bis Tₙ) bestimmt, und wobei die Parameter der Steuerung mit geschlossenem Regelkreis (p) an eine industrielle Steuerungsvorrichtung (13) übertragen werden, die zur Steuerung der industriellen Anlage oder des industriellen Prozesses (11) angeordnet ist.

7. Verfahren zur Bestimmung eines linearen parametrischen dynamischen Systemmodells des dynamischen Verhaltens mit offenem Regelkreis von einer industriellen Anlage oder einem industriellen Prozess (11), umfassend die folgenden Schritte:
• Lesen in gemessenen Eingabedaten (u) und gemessenen Ausgabedaten (y) der industriellen Anlage oder des industriellen Prozesses (11),
• Simulieren eines dynamischen Verhaltens des Systemmodells als Reaktion auf die gemessenen Eingabedaten (u), wodurch simulierte Ausgabedaten (y_{Sim}) generiert werden,
• Vergleichen der gemessenen Ausgabedaten (y) mit den simulierten Ausgabedaten (y_{Sim}), um eine Qualität des Systemmodells zu bestimmen,
• Bestimmen einer Modellordnung (n) des Systemmodells sowie entsprechender Parameter des Systemmodells (K, T₁ bis Tₙ) durch Minimieren einer Differenz zwischen den gemessenen Ausgabedaten (y) und den simulierten Ausgabedaten (yₛᵢₘ) unter Verwendung einer Methode der kleinsten Quadrate, bis die Qualität des Systemmodells als ausreichend hoch bestimmt wird,
• Bereitstellen der Modellordnung (n) und der Parameter des Systemmodells (K, T₁ bis Tₙ) an eine Steuerungsdesigneinheit,
**dadurch gekennzeichnet, dass**
• zuerst Intermediärparameter (K, Tᵤ, T_{g}) bestimmt werden, die das dynamische Verhalten mit offenem Regelkreis eindeutig beschreiben, wobei die Anzahl (m) der Intermediärparameter vorab festgelegt wird und als nicht größer als die Anzahl der Parameter des Systemmodells (s) definiert ist, und
• danach die Parameter des Systemmodells (K, T₁ bis Tₙ) aus den Intermediärparametern (K, Tᵤ, T_{g}) unter Verwendung einer vorab festgelegten eindeutigen Zuordnung zwischen den Intermediärparametern und den Parametern des Systemmodells berechnet werden,
• wobei die eindeutige Zuordnung so gewählt wird, dass für jeden Satz von Intermediärparametern (K, Tᵤ, T_{g}) die zugeordneten Parameter des Systemmodells (K, T₁ bis Tₙ) in derselben Größenordnung liegen.

8. Verfahren nach Anspruch 7, wobei die Intermediärparameter eine Verstärkung (K), eine Totzeitkonstante (Tᵤ) und eine Ausgleichszeitkonstante (T_{g}) sind, die die Sprungantwort der industriellen Anlage oder des industriellen Prozesses beschreiben, und wobei die eindeutige Zuordnung so gewählt wird, dass jeder Parameter des Systemmodells nur mit variierendem Verhältnis der Totzeitkonstante (Tᵤ) zu der Ausgleichszeitkonstante (T_{g}) variiert.

9. Verfahren nach Anspruch 8, wobei die Anzahl der Parameter des Systemmodells und dadurch die Modellordnung (n) des Systemmodells mit zunehmendem Verhältnis der Totzeitkonstante (Tᵤ) zu der Ausgleichszeitkonstante (T_{g}) zunimmt.

10. Verfahren nach einem der Ansprüche 8 oder 9, wobei die gemessenen Eingabedaten (u) und Ausgabedaten (y) eine Sprungantwort der Anlage oder des Prozesses repräsentieren, und wobei die Verstärkung (K), die Totzeitkonstante (Tᵤ) und die Ausgleichskonstante (T_{g}) basierend auf der Wendetangentenmethode bestimmt werden.

11. Verfahren nach einem der Ansprüche 7 bis 10, wobei das Systemmodell als eine Reihe von mindestens zwei Verzögerungselementen erster Ordnung angenommen wird, wobei die Parameter des Systemmodells eine Verstärkung (K) und mindestens zwei Verzögerungszeitkonstanten (T₁, T₂) sind, wobei jede der Verzögerungszeitkonstanten einem der Verzögerungselemente erster Ordnung entspricht.

## Revendications

1. Système (10) conçu pour déterminer un modèle de système dynamique paramétrique linéaire du comportement dynamique en boucle ouverte d'une usine ou d'un processus industriel (11), comprenant :
- une unité de lecture de données (5a, 5b) pour lire des données d'entrée mesurées (u) et des données de sortie mesurées (y) de l'usine ou du processus industriel (11) ;
- une unité d'évaluation (2, 3a, 3b) pour simuler un comportement dynamique du modèle de système sous forme d'une réponse aux données d'entrée mesurées (u), générant ainsi des données de sortie simulées (yₛᵢₘ), et comparer les données de sortie mesurées (y) aux données de sortie simulées (yₛᵢₘ) afin de déterminer une qualité du modèle de système ;
- une unité d'estimation (6a, 6b) afin de déterminer un ordre de modèle (n) du modèle de système sous forme du nombre de paramètres de modèle de système, ainsi que pour déterminer des paramèters de modèle de système correspondants (K, T₁ à Tₙ) en minimisant une différence entre les données de sortie mesurées (y) et les données de sortie simulées (yₛᵢₘ₎ en utilisant un procédé des moindres carrés jusqu'à ce que la qualité du modèle de système soit déterminée comme étant suffisamment élevée ;
- une interface de paramètres (4) conçue pour fournir l'ordre de modèle (n) et les paramètres de modèle de système (K, T₁ à Tₙ) à une unité de conception de commande (12) ;
**caractérisé en ce que**
- l'unité d'estimation (6a, 6b) est conçue pour d'abord déterminer des paramètres intermédiaires (K, Tᵤ, T_{g}) décrivant uniquement le comportement dynamique en boucle ouverte, le nombre (m) des paramètres intermédiaires étant prédéterminé et défini pour ne pas dépasser le nombre de paramètres de modèle de système(s), puis pour calculer les paramètres de modèle de système (K, T₁ à Tₙ) à partir des paramètres intermédiaires (K, Tᵤ, T_{g}) en utilisant une attribution unique prédéterminée entre les paramètres intermédiaires et les paramètres de modèle de système ;
- dans lequel l'attribution unique est choisie de sorte que pour chaque ensemble de paramètres intermédiaires (K, Tᵤ, T_{g}), les paramètres de modèle de système (K, T₁ à Tₙ) attribués soient du même ordre de grandeur.

2. Système selon la revendication 1, dans lequel les paramètres intermédiaires sont un gain (K), une constante de temps mort (Tᵤ) et une constante de temps d'équilibrage (T_{g}) décrivant la réponse par étape de l'usine ou du processus industriel, et dans lequel l'attribution unique est choisie de sorte que chaque paramètre de modèle de système varie selon un rapport de variation entre la constante de temps mort (Tᵤ) et la constante de temps d'équilibrage (T_{g}) uniquement.

3. Système selon la revendication 2, dans lequel le nombre de paramètres de modèle de système et donc l'ordre de modèle (n) du modèle de système augmentent selon le rapport croissant entre la constante de temps mort (Tᵤ) et la constante de temps d'équilibrage (T_{g}).

4. Système selon l'une quelconque des revendications 2 ou 3, dans lequel les données d'entrée (u) et de sortie (y) mesurées représentent une réponse par étape de l'usine ou du processus, et dans lequel l'unité d'estimation (6a, 6b) est conçue pour déterminer le gain (K), la constante de temps mort (Tᵤ) et la constante de temps d'équilibrage (T_{g}) en fonction d'un procédé de tangente à inflexion.

5. Système selon l'une quelconque des revendications précédentes, dans lequel le modèle de système est considéré comme étant une série d'au moins deux éléments de retard de premier ordre, les paramètres de modèle de système étant un gain (K) et au moins deux constantes de temps de retard (T₁,T₂), chacune des constantes de temps de retard correspondant à un des éléments de retard de premier ordre.

6. Système de conception de commande comprenant un système (10) selon l'une quelconque des revendications précédentes ainsi qu'une unité de conception de commande (12), laquelle unité de conception de commande (12) détermine des paramètres (p) d'une unité de commande en boucle fermée en fonction de l'ordre de modèle (n) et des paramètres de modèle de système (K, T₁ à Tₙ), et dans lequel les paramètres de l'unité de commande en boucle fermée (p) sont transmis vers un dispositif de commande industriel (13) conçu pour commander l'usine ou le processus industriel (11).

7. Procédé pour déterminer un modèle de système dynamique paramétrique linéaire du comportement dynamique en boucle ouverte d'une usine ou d'un processus industriel (11), comprenant les étapes consistant à :
- lire des données d'entrée mesurées (u) et des données de sortie mesurées (y) de l'usine ou du processus industriel (11) ;
- simuler un comportement dynamique du modèle de système sous forme d'une réponse aux données d'entrée mesurées (u), générant ainsi des données de sortie simulées (yₛᵢₘ) ;
- comparer les données de sortie mesurées (y) aux données de sortie simulées (yₛᵢₘ) afin de déterminer une qualité du modèle de système ;
- déterminer un ordre de modèle (n) du modèle de système ainsi qu'un nombre de paramètres de modèle de système correspondants (K, T₁ à Tₙ) en minimisant une différence entre les données de sortie mesurées (y) et les données de sortie simulées (yₛᵢₘ₎ en utilisant un procédé des moindres carrés jusqu'à ce que la qualité du modèle de système soit déterminée comme étant suffisamment élevée ;
- fournir l'ordre de modèle (n) et les paramètres de modèle de système (K, T₁ à Tₙ) à une unité de conception de commande ;
**caractérisé en ce que** :
- on détermine d'abord des paramètres intermédiaires (K, Tᵤ, T_{g}) décrivant uniquement le comportement dynamique en boucle ouverte, le nombre (m) des paramètres intermédiaires étant prédéterminé et défini pour ne pas dépasser le nombre de paramètres de modèle de système(s) ;
- on calcule ensuite les paramètres de modèle de système (K, T₁ à Tₙ) à partir des paramètres intermédiaires (K, Tᵤ, T_{g}) en utilisant une attribution unique prédéterminée entre les paramètres intermédiaires et les paramètres de modèle de système ;
- dans lequel l'attribution unique est choisie de sorte que pour chaque ensemble de paramètres intermédiaires (K, Tᵤ, T_{g}), les paramètres de modèle de système (K, T₁ à Tₙ) attribués soient du même ordre de grandeur.

8. Procédé selon la revendication 7, dans lequel les paramètres intermédiaires sont un gain (K), une constante de temps mort (Tᵤ) et une constante de temps d'équilibrage (T_{g}) décrivant la réponse par étape de l'usine ou du processus industriel, et dans lequel l'attribution unique est choisie de sorte que chaque paramètre de modèle de système varie selon un rapport de variation entre la constante de temps mort (Tᵤ) et la constante de temps d'équilibrage (T_{g}) uniquement.

9. Procédé selon la revendication 8, dans lequel le nombre de paramètres de modèle de système et donc l'ordre de modèle (n) du modèle de système augmentent selon le rapport croissant entre la constante de temps mort (Tᵤ) et la constante de temps d'équilibrage (T_{g}).

10. Procédé selon l'une quelconque des revendications 8 ou 9, dans lequel les données d'entrée (u) et de sortie (y) mesurées représentent une réponse par étape de l'usine ou du processus, et dans lequel le gain (K), la constante de temps mort (Tᵤ) et la constante de temps d'équilibrage (T_{g}) sont déterminés en fonction du procédé de tangente à inflexion.

11. Procédé selon l'une quelconque des revendications 7 à 10, dans lequel le modèle de système est considéré comme étant une série d'au moins deux éléments de retard de premier ordre, les paramètres de modèle de système étant un gain (K) et au moins deux constantes de temps de retard (T₁, T₂), chacune des constantes de temps de retard correspondant à un des éléments de retard de premier ordre.
